# EUROPEAN PATENT APPLICATION

(11) **EP 0 658 388 A1**
(43) Date of publication of application: **21.06.1995**
(21) Application number: 94119602.4
(22) Date of filing: 12.12.1994
(51) Int. Cl.: B23B 13/08

(54) **Device for the damped elastic support of rotating bars, particularly for bar feeders**

(30) Priority: 14.12.1993 IT BO930241 U
(71) Applicant: I.E.M.C.A. S.p.a. Industria Elettromeccanica Complessi Automatici, I-48018 Faenza, Province of Ravenna (IT)
(72) Inventor: Camelli, Marco, I-48018 Faenza (Prov. of Ravenna) (IT)
(74) Representative: Modiano, Guido, Dr.-Ing.

(57) **Abstract**

Device for neutralizing vibrations generated by rotating bars, particularly for bar feeders, comprising elastic damping elements (3,4,13,14) which are interposed between the bar guiding supports (5) and the plane (1) on which the supports are coupled.

## Description

The present invention relates to a device for the damped elastic support of rotating bars, particularly for bar feeders.

It is known that in bar feeders for machine tools, and specifically for automatic lathes with one or more spindles, the bars rotate within supports that allow them to advance due to the thrust applied by specifically provided bar pushers. The supports can be constituted by closed or openable bushes: in the first ones, the bar to be machined is inserted axially, whereas in the second ones it is inserted laterally after opening the supports.

In the case of feeders for single-spindle lathes, the supports are mounted on a fixed base; in feeders for multispindle lathes, the supports are instead mounted on a rotating beam and are angularly distributed so that the bushes are coaxial to the various spindles.

Since it is impossible in practice to provide bushes that can support and guide all bar types in terms of cross-section and diameter, the bushes are generally sized so that they can support and guide multiple ranges of bars having different cross-sections and diameters.

This requirement unavoidably entails some drawbacks, especially when the bars are narrow or have a diameter that is smaller than the diameter of the bushes or have a polygonal cross-section. In these cases the bars in fact generate extremely unpleasant vibrations and noise that can be contrasted by providing screens of sound-deadening material, accordingly entailing additional costs.

A principal aim of the present invention is therefore to provide a device that can obviate the drawbacks described above and observed in known feeders but with a manufacturing cost that is totally irrelevant if compared with the systems currently being used.

According to the invention, there is provided a device for neutralizing vibrations generated by rotating bars, particularly for bar feeders, which is characterized in that it comprises elastic damping elements which are interposed between said bar guiding supports and the plane on which said supports are coupled.

The particular characteristics and advantages of the present invention will become apparent from the following detailed description of some preferred embodiments thereof, illustrated only by way of non-limitative example in the accompanying drawings, wherein:
figure 1 is a view of a support according to a first embodiment of the invention;
figure 2 is a view of a portion of a feeder equipped with the supports of figure 1;
figure 3 is a view of a support according to another embodiment of the invention;
figure 4 is a view of a support according to a third embodiment of the invention; and
figure 5 is a view of a support according to a fourth embodiment of the invention.

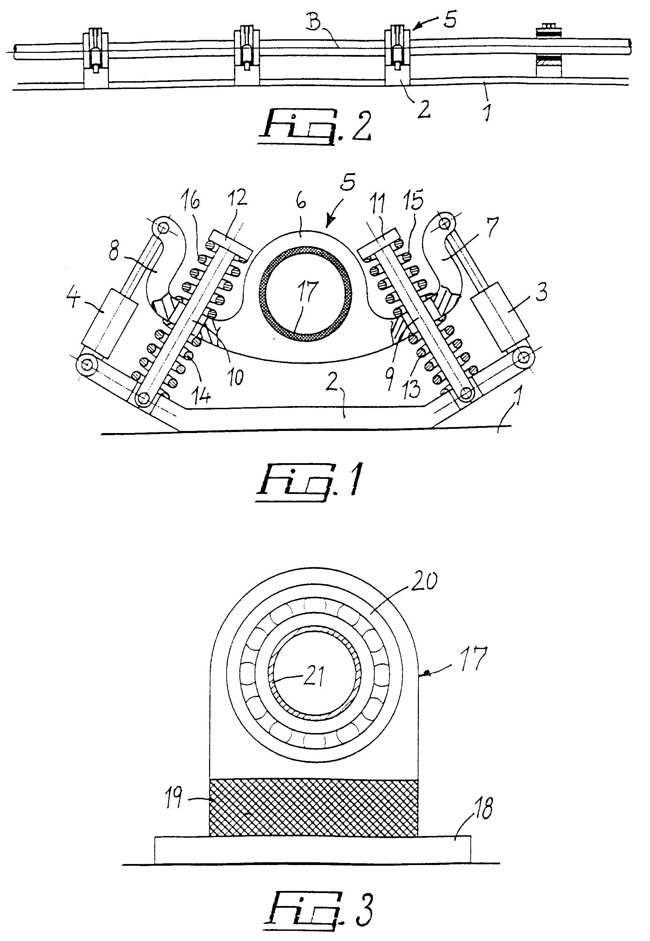

With reference to figures 1 and 2, the reference numeral 1 designates the frame of a bar feeder, which can be stationary, for example if the feeder must feed a single-spindle lathe, or rotatable, for example if the feeder must feed a multispindle lathe.

Multiple brackets 2 are located on the frame 1. Two double-action fluid (preferably hydraulic) shock absorbers 3 and 4 are articulated to the opposite ends of each bracket.

The shock absorbers 3 and 4 articulately support a supporting element which is generally designated by the reference numeral 5. Said supporting element 5 comprises a central bush 6 from which two arms 7 and 8 extend in opposite directions and are shaped for the coupling of the shock absorbers 3 and 4.

One end of the stems 9 and 10 is articulated to the bracket 2 and the opposite end has an enlarged head 11 and 12. Springs 13, 14 and 15, 16 are placed on the stems 9 and 10 and act between the arms 7, 8 and the bracket 2 on one side and between the arms 7, 8 and the heads 11, 12 on the other side.

The bushes 6 are internally lined with a layer 17 of antifriction, sound-deadening material.

The bar B to be fed is pushed towards the lathe through the bushes 6 by an appropriate bar pusher. With the device according to the present invention, the vibrations produced during rotation are damped effectively by the combined action of the shock absorbers and of the springs, which prevent said vibrations from discharging onto the frame and prevent the onset of resonances.

A second constructive solution is shown in figure 3 and entails a supporting element 17 which is fixed to the frame 18 with the interposition of a block 19 made of rubber with a high damping power, i.e. that has both elastic and damping characteristics.

A rolling bearing 20 is supported in the supporting element 17, and its inner ring is covered with a layer 21 that can absorb part of the impact energy of the bar.

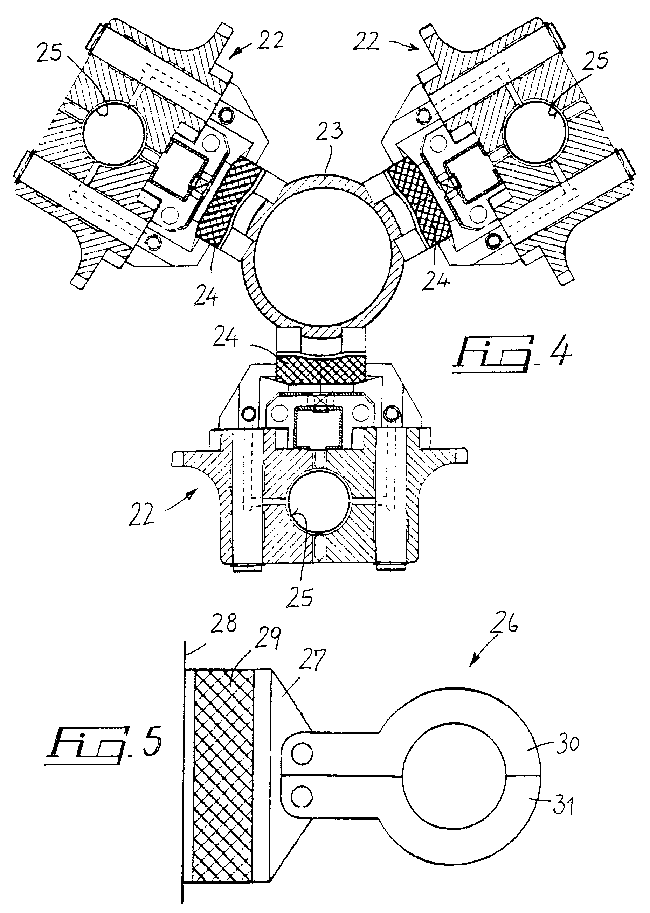

Figure 4 illustrates a solution that is related to the application of the invention to a bar feeder for multispindle lathes, as described for example in European publication no. 574882 in the name of the same Applicant, incorporated herein by reference for clearer understanding. The feeder of figure 4 comprises multiple supporting elements 22 which are fixed at an equal angular distance on a central beam 23.

The fixing arrangement entails that elastic blocks 24 having a high damping power are interposed between the elements 22 and the beam 23.

The supporting elements 22 form guiding channels 25 that can be opened to allow to load a bar and to allow the bar pusher to pass.

Finally, figure 5 illustrates a further embodiment in which the supporting element 26 comprises a plate 27 which is coupled to the frame 28 by means of a rubber block 29 having a high damping power.

Two half-rings 30 and 31 are articulated to the plate 27 and are suitable to complement each other to form the bar guiding bush.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Device for neutralizing vibrations generated by rotating bars, particularly for bar feeders, characterized in that it comprises elastic damping elements (3, 4, 13, 14; 19; 24; 29) which are interposed between supports (5; 17; 22; 26) that guide the bars (B) and the plane (1; 18; 23; 28) on which said supports are coupled.

2. Device according to claim 1, characterized in that said supports (5) form guiding bushes (6) for the bars (B) and in that said damping elements are constituted by hydraulic shock absorbers (3, 4) which are interposed between said bushes (6) and a frame (2) for coupling the supports and elastic means (13, 14) arranged in parallel to said hydraulic shock absorbers.

3. Device according to claim 1, characterized in that said supports (17; 22; 26) form bushes (20) for guiding the bars and in that said damping elements are constituted by blocks (19; 24; 29) which are made of a rubber having a high damping power and are interposed between said bushes and a frame for coupling the supports.

4. Device according to one of claims 2 or 3, characterized in that said bar guiding bushes are closed (20) or can be opened (25; 30, 31).

5. Device for the damped elastic support of rotating bars, particularly for bar feeders, comprising one or more of the technical features described and/or illustrated herein.
